# FASCICULE DE BREVET EUROPEEN

(11) **EP 3 824 221 B1**
(45) Date de publication et mention de la délivrance du brevet: **28.09.2022**
(21) Numéro de dépôt: 19753418.3
(22) Date de dépôt: 18.07.2019
(51) Int. Cl.: F23R 3/06, F23R 3/60

(54) **ENSEMBLE POUR UNE TURBOMACHINE**
ANORDNUNG FÜR EINE TURBOMASCHINE
ASSEMBLY FOR A TURBOMACHINE

(30) Priorité: 19.07.2018 FR 1856712
(43) Date de publication de la demande: 26.05.2021
(73) Titulaire: SAFRAN AIRCRAFT ENGINES, 75015 Paris (FR)
(72) Inventeur: TAMIZIER, Julien, Michel, 77550 MOISSY-CRAMAYEL (FR); TEXIER, Christophe, Bernard, 77550 MOISSY-CRAMAYEL (FR); BONNEAU, Damien, 77550 MOISSY-CRAMAYEL (FR); BONNEFOI, Damien, 77550 MOISSY-CRAMAYEL (FR); CHAPELLE, François, Xavier, 77550 MOISSY-CRAMAYEL (FR)
(74) Mandataire: Ernest Gutmann - Yves Plasseraud S.A.S.
(86) Numéro de dépôt international: PCT/FR2019/051805
(87) Numéro de publication internationale: WO 2020/016533

(56) Documents cités:
- EP-A1- 2 042 806
- FR-A1- 2 887 588
- FR-A1- 3 004 518

## Description

### DOMAINE

La présente invention concerne un ensemble pour une turbomachine, telle par exemple qu'un turboréacteur ou un turbopropulseur d'avion.

### CONTEXTE

Un tel ensemble est connu du document FR 3 004 518 au nom de la Demanderesse et est illustré aux figures 1 et 2. Celui-ci comporte une chambre annulaire de combustion 1 agencée en aval d'un compresseur et d'un diffuseur (non représentés), et en amont d'un distributeur 2 d'entrée d'une turbine haute-pression.

La chambre de combustion 1 comprend des parois de révolution interne et externe, appelées respectivement virole interne 3 et virole externe 4, qui s'étendent à l'intérieur l'une de l'autre et qui sont reliées en amont à une paroi annulaire de fond de chambre (non représentée).

Afin de limiter la déformation des viroles interne 3 et externe 4, ces dernières sont équipées à leur extrémité aval de brides 6 interne et externe. Chaque bride 6 est annulaire et présente une section en forme de U ou en forme d'épingle. Chaque bride 6 s'étend radialement vers l'intérieur ou vers l'extérieur et comporte une partie radiale 7a rattachée à la virole interne 3 ou à la virole externe 4 de la chambre de combustion 1. L'extrémité libre 6a de chaque bride 6 est en outre destinée à coopérer avec un carter interne 8 ou un carter externe 9 de la chambre 1. Une partie cylindrique 7b s'étend vers l'aval depuis la partie radiale 7a de la bride 6.

Le distributeur 2 est fixé en aval de la chambre 1 par des moyens appropriés et comprend des plateformes interne 11 et externe 12 qui sont reliées entre elles par des aubes 13 sensiblement radiales. La plateforme externe 12 du distributeur 2 est alignée axialement avec la partie d'extrémité aval de la virole externe 4 de la chambre 1, et sa plateforme interne 11 est alignée axialement avec la partie d'extrémité aval de la virole interne 3 de la chambre 1. L'extrémité amont de chaque plateforme 11, 12 du distributeur 2 comporte un rebord radial 14 de dimension plus réduite que la partie radiale 7a de la bride 6 correspondante de la chambre de combustion 1.

Un ensemble de distributeur 2 est généralement monté en aval de la chambre de combustion et comprend plusieurs distributeurs dont les plateformes sont des secteurs d'anneau, les plateformes des distributeurs étant montées circonférentiellement bout à bout pour créer un canal de circulation des fluides en aval de la chambre de combustion.

Les parties radiales 7a et les rebords 14 délimitent, pour chaque virole 3, 4, un espace annulaire interne 15 qui débouche à une extrémité dans la chambre 1 et qui est fermé à son autre extrémité par des moyens d'étanchéité 16.

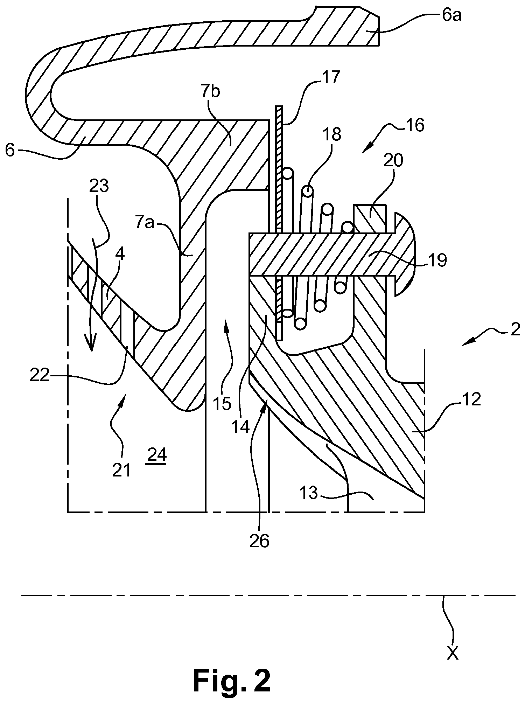

Comme cela est mieux visible à la figure 2, ces moyens d'étanchéité 16 comportent des lamelles d'étanchéité 17 s'étendant radialement et circonférentiellement le long de chaque secteur de distributeur 2. Chaque lamelle 17 est apte à prendre appui de façon étanche sur une face radiale du rebord 14 correspondant du distributeur 2 et sur l'extrémité libre de la partie axiale 7b de la bride 6 correspondante de la chambre de combustion 1. Les lamelles 17 sont maintenues en appui sur lesdites parties 7b, 14 à l'aide de moyens élastiques de rappel.

Ces moyens élastiques sont par exemple des ressorts hélicoïdaux 18 de forme conique, montés autour de vis 19 qui sont vissées dans des pattes 20 s'étendant radialement depuis la virole correspondante 11, 12 du distributeur 2. Les parties aval 21 des viroles interne et externe 3, 4 peuvent comporter des multiperforations 22. Lors du fonctionnement de la turbomachine, de l'air de contournement 23 circule dans les espaces 24 et 25 délimités respectivement par le carter externe 9 et la virole externe 4, d'une part, et par le carter interne 8 et la virole interne 3, d'autre part. Cet air de contournement 23 traverse les multiperforations 22, de manière à limiter l'échauffement des parties aval 21 des viroles interne et externe 3, 4.

L'extrémité amont de chaque virole 11, 12 du distributeur 2 forme généralement un décrochement 26 ou une marche visant à éviter la formation d'un point d'arrêt du flux chaud issu de la chambre de combustion 1. Un tel décrochement forme cependant des recirculations locales du flux de gaz chaud, pouvant générer une dégradation prématurée de la plateforme correspondante 11, 12 du distributeur 2.

Un autre ensemble de ce type est également connu du document FR 2 887 588.

L'invention a notamment pour but d'apporter une solution simple, efficace et économique à ce problème.

### RESUME DE L'INVENTION

La présente invention concerne tout d'abord un ensemble pour une turbomachine, comportant
- une chambre de combustion comprenant à son extrémité aval une bride aval s'étendant radialement,
- un distributeur disposé en aval de la chambre de combustion et comportant une plateforme à partir de laquelle s'étende radialement au moins une aube, la plateforme comprenant un rebord amont s'étendant radialement et délimitant, avec la bride aval disposée en regard, un espace débouchant dans la chambre de combustion à son extrémité radialement interne et fermé à son extrémité radialement externe, par des moyens d'étanchéité fixés au distributeur,
caractérisé en ce que la bride aval de la chambre de combustion comporte au moins un orifice de refroidissement rectiligne et traversant ladite bride en débouchant dans l'espace, en regard de la plateforme du distributeur.

De l'air contournant la chambre de combustion peut alors traverser ledit orifice et impacter la virole du distributeur de manière à la refroidir efficacement et éviter sa dégradation par les recirculations de gaz chaud en aval de la chambre de combustion. L'air de refroidissement traversant ledit orifice débouche dans l'espace annulaire, ce qui permet d'augmenter les dimensions de la zone refroidie de la virole du distributeur. Après refroidissement de la virole, l'air situé dans ledit espace annulaire est dirigé radialement vers l'intérieur avant de déboucher à l'extrémité aval de la chambre de combustion, et de former des films aptes à refroidir les plateformes des distributeurs.

Les termes radial et axial sont définis par rapport à l'axe de la turbomachine. Les termes amont et aval sont définis par rapport au sens du flux de gaz au sein de la turbomachine.

Les moyens d'étanchéité peuvent comporter au moins une lamelle s'étendant radialement et circonférentiellement, et prenant appui axialement sur la bride aval de la chambre de combustion et sur le rebord amont du distributeur.

La lamelle peut être rappelée en appui sur la bride correspondante de la chambre de combustion et sur la virole correspondante du distributeur, par des moyens de rappel élastiques.

Les moyens de rappel élastiques peuvent comporter au moins un ressort de compression, par exemple un ressort hélicoïdal cylindrique ou conique.

La partie radiale de la bride aval de la chambre de combustion peut comporter au moins deux orifices de refroidissement traversant la bride aval et débouchant dans l'espace, deux parmi lesdits orifices s'étendant selon deux directions formant un angle entre elles.

L'ensemble comporte au moins un orifice incliné dans une première direction circonférentielle et au moins un orifice incliné dans une seconde direction circonférentielle, opposée à la première direction circonférentielle.

Chacun desdits orifices est ainsi incliné par rapport au plan radial. L'angle d'inclinaison par rapport au plan radial est par exemple compris entre 15 et 75°, par exemple de l'ordre de 45°.

Ledit ensemble peut comporter au moins un orifice orienté axialement.

Ledit orifice n'est ainsi pas incliné dans la direction circonférentielle mais est orienté parallèlement à l'axe de la turbomachine.

L'ensemble peut comporter au moins un premier orifice orienté axialement, et au moins un deuxième et un troisième orifices situés circonférentiellement de part et d'autre du premier orifice, les deuxième et troisième orifices étant inclinés dans deux directions circonférentielles opposées.

L'ensemble peut comporter au moins un quatrième orifice et au moins un cinquième orifice, situés respectivement circonférentiellement de part et d'autre des deuxième et troisième orifices, à l'opposé du premier orifice, les quatrième et cinquième orifices étant orientés axialement.

Les orifices peuvent présenter des inclinaisons circonférentielles multiples. Ceci permet d'assurer un refroidissement plus homogène par film d'air des plateformes du distributeur comparativement à des perçages qui sont inclinés dans la même direction.

L'ensemble peut comporter au moins deux orifices décalés radialement et circonférentiellement l'un de l'autre.

Les bords des orifices débouchant dans l'espace peuvent être décalés les uns des autres d'une distance comprise entre 0.1 et 6 mm.

Les orifices peuvent être cylindriques. Les orifices peuvent présenter un diamètre compris entre 0.1 mm et 6 mm, par exemple de l'ordre de 1 mm.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

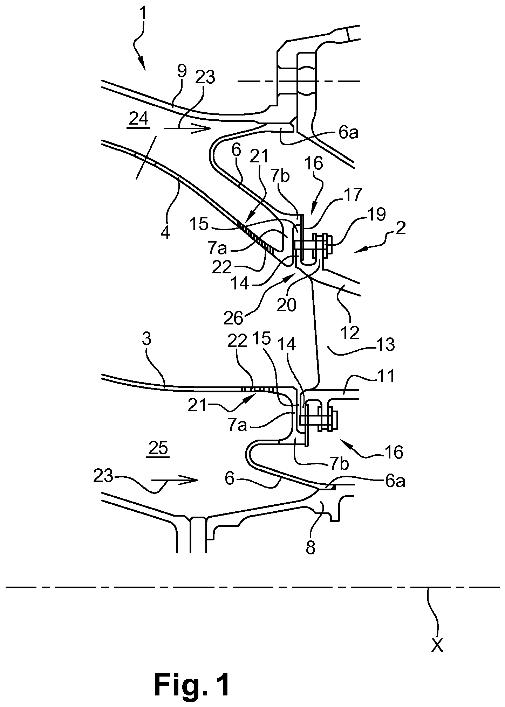

- la figure 1 est une demi-vue schématique en coupe axiale d'une partie d'un ensemble de l'art antérieur ;
- la figure 2 est une vue de détail de la figure 1 ;
- la figure 3 est une vue correspondant à la figure 2 et illustrant une forme de réalisation de l'invention ;
- la figure 4 est une vue en perspective d'une partie d'une virole externe de la chambre de combustion appartenant à l'ensemble de la figure 3.

### DESCRIPTION DETAILLEE

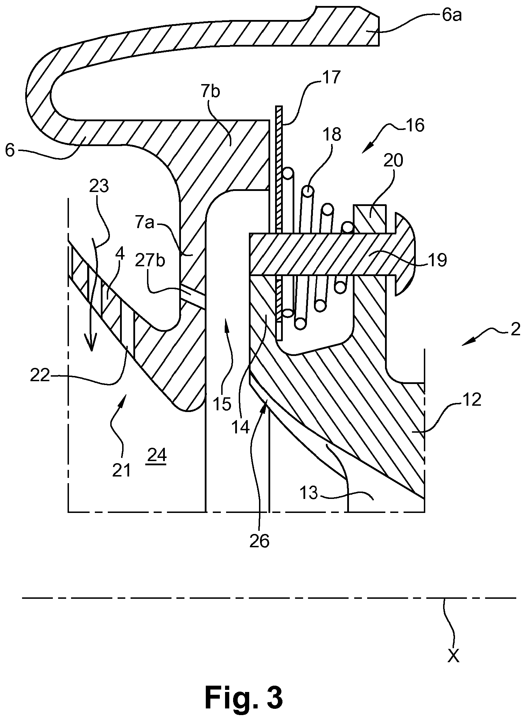

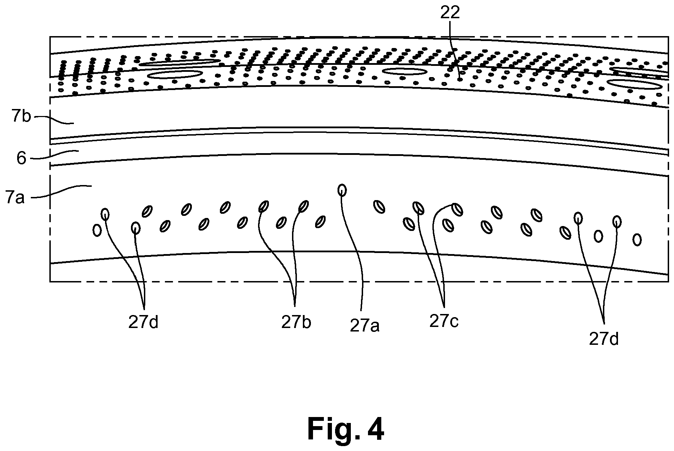

Les figures 3 et 4 représentent un ensemble pour une turbomachine selon une forme de réalisation de l'invention. Comme précédemment, ledit ensemble comporte une chambre annulaire de combustion 1 d'une turbomachine, telle qu'un turboréacteur ou un turbopropulseur d'avion, agencée en aval d'un compresseur et d'un diffuseur (non représentés), et en amont d'un distributeur 2 d'entrée d'une turbine haute-pression.

La chambre de combustion 1 comprend des viroles interne et externe 3, 4, reliées en amont à une paroi annulaire de fond de chambre.

Les extrémités aval des viroles 3, 4 comportent des brides 6 interne et externe. Chaque bride 6 est annulaire et présente une section en forme de U ou en forme d'épingle. Chaque bride 6 s'étend radialement vers l'intérieur ou vers l'extérieur et comporte une partie radiale 7a rattachée à la virole interne 3 ou à la virole externe 4 de la chambre de combustion 1. L'extrémité libre 6a de chaque bride 6 est en outre destinée à coopérer avec un carter interne 8 ou un carter externe 9 de la chambre 1. Une partie cylindrique 7b s'étend vers l'aval depuis la partie radiale 7a de la bride 6.

Le distributeur 2 est fixé en aval de la chambre 1 par des moyens appropriés et comprend des plateformes interne 11 et externe 12 qui sont reliées entre elles par des aubes 13 sensiblement radiales. La plateforme externe 12 du distributeur 2 est alignée axialement avec la partie d'extrémité aval de la virole externe 4 de la chambre 1, et sa plateforme interne 11 est alignée axialement avec la partie d'extrémité aval de la virole interne 3 de la chambre 1. L'extrémité amont de chaque plateforme 11, 12 du distributeur 2 comporte un rebord radial 14 de dimension plus réduite que la partie radiale 7a de la bride 6 correspondante de la chambre de combustion 1.

L'extrémité amont de chaque plateforme 11, 12 du distributeur 2 forme généralement un décrochement 26 ou une marche descendante visant à éviter la formation d'un point d'arrêt du flux chaud issu de la chambre de combustion 1. En variante non représentée, une marche montante peut être formée. Un ensemble distributeur 2 est monté en aval de la chambre de combustion et comprend plusieurs distributeurs dont les plateformes sont des secteurs d'anneau, les plateformes des distributeurs étant montées circonférentiellement bout à bout pour créer un canal de circulation des fluides en aval de la chambre de combustion.

Les parties radiales 7a et les rebords 14 délimitent, pour chaque virole 3, 4, un espace annulaire interne 15 qui débouche à une extrémité dans la chambre 1 et qui est fermé à son autre extrémité par des moyens d'étanchéité 16.

Ces moyens d'étanchéité 16 comportent des lamelles d'étanchéité 17 s'étendant radialement et circonférentiellement le long de chaque secteur de distributeur 2. Chaque lamelle 17 est apte à prendre appui de façon étanche sur une face radiale du rebord 14 correspondant du distributeur 2 et sur l'extrémité libre de la partie axiale 7b de la bride 6 correspondante de la chambre de combustion 1. Les lamelles 17 sont maintenues en appui sur lesdites parties 7b, 14 à l'aide de moyens élastiques de rappel.

Ces moyens élastiques sont par exemple des ressorts hélicoïdaux 18 de forme conique, montés autour de vis 19 qui sont vissées dans des pattes 20 s'étendant radialement depuis la plateforme correspondante 11, 12 du distributeur 2. Les parties aval 21 des viroles interne et externe 3, 4 peuvent comporter des multiperforations 22.

La partie radiale 7a de la bride comportent des zones, situées en regard d'un distributeur 2, pourvues d'orifices 27a, 27b, 27c, 27d.

En particulier, chaque zone comporte un orifice 27a circonférentiellement médian, orienté selon la direction axiale, des orifices 27b et 27c situés circonférentiellement de part et d'autre de l'orifice médian 27a, et des orifices 27d situés aux extrémités circonférentielles de chaque zone, lesdits orifices 27d étant orientés selon la direction axiale.

Les orifices 27b et 27c sont inclinés selon deux directions circonférentielles opposées et forment des angles compris entre 15 et 75° avec le plan axial, par exemple un angle de l'ordre de ±45°. Le signe positif ou négatif de l'angle est fonction de l'inclinaison des orifices.

Les orifices 27a à 27d sont cylindriques et débouchent, en amont, dans les espaces 24 et 25 et, en aval, dans l'espace annulaire 15. Chaque orifice comporte un diamètre compris entre 0.1 mm et 6 mm, par exemple de l'ordre de 1 mm.

Chaque zone peut comporter un unique orifice central 27a, dix orifices 27b, dix orifices 27c et deux paires de trois ou quatre orifices 27d, comme illustré à la figure 4.

Les extrémités aval des orifices 27a à 27d, débouchant dans l'espace annulaire 15, peuvent être écartées les unes des autres dans la direction radiale et/ou dans la direction circonférentielle, d'une distance comprise entre 0.1 et 6 mm.

Les orifices 27b, 27c et 27d sont ici agencés en deux rangées décalées radialement l'une de l'autre et sont disposés de façon alternée. L'orifice 27a est décalé radialement à l'opposé de la veine d'écoulement des gaz, par rapport aux orifices 27b, 27c et 27d.

Lors du fonctionnement de la turbomachine, de l'air de contournement 23 circule dans les espaces 24 et 25 délimités respectivement par le carter externe 9 et la virole externe 4, d'une part, et par le carter interne 8 et la virole interne 3, d'autre part. Cet air de contournement 23 traverse les multiperforations 22, de manière à limiter l'échauffement des parties aval 21 des plateformes interne et externe 3, 4, et traverse les orifices 27a à 27d, de manière à refroidir les plateformes correspondantes 11, 12 du distributeur haute pression 2.

## Revendications

1. Ensemble pour une turbomachine comportant
- une chambre de combustion (1) comprenant à son extrémité aval une bride aval (6) s'étendant radialement,
un distributeur (2) disposé en aval de la chambre de combustion (1) et comportant une plateforme (11, 12) à partir de laquelle s'étende radialement au moins une aube (13), la plateforme (11, 12) comprenant un rebord amont s'étendant radialement et délimitant, avec la bride aval (6) disposée en regard, un espace (15) débouchant dans la chambre de combustion (1) à son extrémité radialement interne et fermé à son extrémité radialement externe, par des moyens d'étanchéité (17, 18) fixés au distributeur (2), la bride aval (6) de la chambre de combustion (1) comportant au moins un orifice de refroidissement rectiligne et traversant ladite bride (6) en débouchant dans l'espace (15), en regard de la plateforme (11, 12) du distributeur (2), la partie radiale (7a) de la bride aval (6) de la chambre de combustion (1) comportant au moins deux orifices de refroidissement (27a, 27b, 27c, 27d) traversant la bride aval 6 et débouchant dans l'espace (15),
**caractérisé en ce que**
deux orifices (27b, 27c) parmi lesdits orifices (27a, 27b, 27c, 27d) s'étendent selon deux directions formant un angle entre elles.

2. Ensemble selon la revendication 1, **caractérisé en ce que** les moyens d'étanchéité comportent au moins une lamelle (17) s'étendant radialement et circonférentiellement, et prenant appui axialement sur la bride aval (6) de la chambre de combustion (1) et sur le rebord amont du distributeur (2).

3. Ensemble selon la revendication 1 à 2, **caractérisé en ce qu'**il comporte au moins un orifice (27b) incliné dans une première direction circonférentielle et au moins un orifice (27c) incliné dans une seconde direction circonférentielle, opposée à la première direction circonférentielle.

4. Ensemble selon l'une des revendications 1 à 3, **caractérisé en ce qu'**il comporte au moins un orifice (27a, 27d) orienté axialement.

5. Ensemble selon la revendication 4 en combinaison avec la revendication 3, **caractérisé en ce qu'**il comporte au moins un premier orifice (27a) orienté axialement, et au moins un deuxième et un troisième orifices (27b, 27c) situés circonférentiellement de part et d'autre du premier orifice (27a), les deuxième et troisième orifices (27b, 27c) étant inclinés dans deux directions circonférentielles opposées.

6. Ensemble selon la revendication 5, **caractérisé en ce qu'**il comporte au moins un quatrième orifice (27d) et au moins un cinquième orifice (27d), situés respectivement circonférentiellement de part et d'autre des deuxième et troisième orifices (27b, 27c), à l'opposé du premier orifice (27a), les quatrième et cinquième orifices (27d) étant orientés axialement.

7. Ensemble selon l'une des revendications 1 à 6, **caractérisé en ce qu'**il comporte au moins deux orifices (27a, 27b, 27c, 27d) décalés radialement et circonférentiellement l'un de l'autre.

8. Ensemble selon l'une des revendications 1 à 7, **caractérisé en ce que** les bords des orifices (27a, 27b, 27c, 27d) débouchant dans l'espace (15) sont décalés les uns des autres d'une distance comprise entre 0.1 et 6 mm.

## Patentansprüche

1. Anordnung für eine Turbomaschine bzw. ein Turbotriebwerk, enthaltend eine Brennkammer (1), die an ihrem stromabwärtigen Ende einen stromabwärtigen Flansch (6) aufweist, der sich radial erstreckt,
einen Leitapparat (2), der stromabwärts der Brennkammer (1) angeordnet ist und eine Plattform (11, 12) aufweist, von der aus sich mindestens eine Schaufel (13) radial erstreckt, wobei die Plattform (11, 12) eine stromaufwärtige Randkante aufweist, die sich radial erstreckt und mit dem gegenüberliegend angeordneten stromabwärtigen Flansch (6) einen Raum (15) begrenzt, der an seinem radial inneren Ende in die Brennkammer (1) mündet und an seinem radial äußeren Ende über Dichtungsmittel (17, 18) verschlossen ist, die an den Leitapparat (2) befestigt sind, wobei der stromabwärtige Flansch (6) der Brennkammer (1) mindestens eine Kühlöffnung aufweist, die geradlinig verläuft und den Flansch (6) durchquert, indem sie in den Raum (15) mündet, der der Plattform (11, 12) des Leitapparats (2) gegenüberliegt, wobei der radiale Abschnitt (7a) des stromabwärtigen Flansches (6) der Brennkammer (1) mindestens zwei Kühlöffnungen (27a, 27b, 27c, 27d) aufweist, die den stromabwärtigen Flansch (6) durchqueren und in den Raum (15) münden,
**dadurch gekennzeichnet, dass** sich zwei Öffnungen (27b, 27c) der genannten Öffnungen (27a, 27b, 27c, 27d) in zwei Richtungen erstrecken, die einen Winkel zwischen sich einschließen.

2. Anordnung nach Anspruch 1,
**dadurch gekennzeichnet, dass** die Dichtungsmittel mindestens eine Lamelle (17) aufweisen, die sich radial und in Umfangsrichtung erstreckt und sich axial am stromabwärtigen Flansch (6) der Brennkammer (1) und an der stromaufwärtigen Randkante des Leitapparats (2) abstützt.

3. Anordnung nach Anspruch 1 bis 2,
**dadurch gekennzeichnet, dass** sie mindestens eine Öffnung (27b) aufweist, die in einer ersten Umfangsrichtung geneigt ist, sowie mindestens eine Öffnung (27c), die in einer zweiten Umfangsrichtung geneigt ist, die der ersten Umfangsrichtung entgegengesetzt ist.

4. Anordnung nach einem der Ansprüche 1 bis 3,
**dadurch gekennzeichnet, dass** sie mindestens eine axial ausgerichtete Öffnung (27a, 27d) aufweist.

5. Anordnung nach Anspruch 4 in Verbindung mit Anspruch 3,
**dadurch gekennzeichnet, dass** sie mindestens eine erste axial ausgerichtete Öffnung (27a) und mindestens eine zweite und eine dritte Öffnung (27b, 27c) aufweist, die in Umfangsrichtung auf beiden Seiten der ersten Öffnung (27a) liegen, wobei die zweite und die dritte Öffnung (27b, 27c) in zwei entgegengesetzte Umfangsrichtungen geneigt sind.

6. Anordnung nach Anspruch 5,
**dadurch gekennzeichnet, dass** sie mindestens eine vierte Öffnung (27d) und mindestens eine fünfte Öffnung (27d) aufweist, die jeweils in Umfangsrichtung auf beiden Seiten der zweiten bzw. dritten Öffnung (27b, 27c), der ersten Öffnung (27a) gegenüberliegend, angeordnet sind, wobei die vierte und die fünfte Öffnung (27d) axial ausgerichtet sind.

7. Anordnung nach einem der Ansprüche 1 bis 6,
**dadurch gekennzeichnet, dass** sie mindestens zwei Öffnungen (27a, 27b, 27c, 27d) aufweist, die radial und in Umfangsrichtung zueinander versetzt sind.

8. Anordnung nach einem der Ansprüche 1 bis 7,
**dadurch gekennzeichnet, dass** die Ränder der in den Raum (15) mündenden Öffnungen (27a, 27b, 27c, 27d) um einen Abstand zwischen 0,1 und 6 mm zueinander versetzt sind.

## Claims

1. Assembly for a turbomachine, comprising:
- a combustion chamber (1) comprising at its downstream end a radially extending downstream flange (6),
a distributor (2) disposed downstream of the combustion chamber (1) and comprising a platform (11, 12) from which at least one vane (13) extends radially, the platform (11, 12) comprising an upstream edge extending radially and delimiting, with the downstream flange (6) disposed opposite, a gap (15) opening into the combustion chamber (1) at its radially inner end and closed at its radially outer end by sealing means (17, 18) fixed to the distributor (2), the downstream flange (6) of the combustion chamber (1) comprising at least one rectilinear cooling orifice passing through said flange (6) and opening into the gap (15) opposite the platform (11, 12) of the distributor (2),
the radial portion (7a) of the downstream flange (6) of the combustion chamber (1) having at least two cooling orifices (27a, 27b, 27c, 27d) passing through the downstream flange (6) and opening into the gap (15), **characterised in that** two of said orifices (27a, 27b, 27c, 27d) extendin two directions forming an angle with each other.

2. Assembly according to claim 1, **characterised in that** the sealing means comprise at least one radially and circumferentially extending lamella (17), which bears axially on the downstream flange (6) of the combustion chamber (1) and on the upstream edge of the distributor (2).

3. Assembly according to claim 1 to 2, **characterised in that** it comprises at least one orifice (27b) inclined in a first circumferential direction and at least one orifice (27c) inclined in a second circumferential direction, opposite to the first circumferential direction.

4. Assembly according to one of claims 1 to 3, **characterised in that** it comprises at least one axially oriented orifice (27a, 27d).

5. Assembly according to claim 4 in combination with claim 3, **characterised in that** it comprises at least one first axially oriented orifice (27a) and at least one second and one third orifice (27b, 27c) located circumferentially on either side of the first orifice (27a), the second and third orifices (27b, 27c) being inclined in two opposite circumferential directions.

6. Assembly according to claim 5, **characterised in that** it comprises at least one fourth orifice (27d) and at least one fifth orifice (27d), situated respectively circumferentially on either side of the second and third orifices (27b, 27c), opposite the first orifice (27a), the fourth and fifth orifices (27d) being oriented axially.

7. Assembly according to one of claims 1 to 6, **characterised in that** it comprises at least two orifices (27a, 27b, 27c, 27d) radially and circumferentially offset from each other.

8. Assembly according to one of claims 1 to 7, **characterised in that** the edges of the orifices (27a, 27b, 27c, 27d) opening into the gap (15) are offset from one another by a distance of between 0.1 and 6 mm.
